# FASCICULE DE BREVET EUROPEEN

(11) **EP 1 335 501 B1**
(45) Date de publication et mention de la délivrance du brevet: **17.09.2008**
(21) Numéro de dépôt: 03290243.9
(22) Date de dépôt: 31.01.2003
(51) Int. Cl.: H04B 3/56

(54) **Procédé de communication sur ligne d'alimentation et dispositif de couplage**
Verfahren zur Stromleitungskommunikation und Kopplervorrichtung
Method for power line communication and coupling apparatus

(30) Priorité: 06.02.2002 FR 0201406
(43) Date de publication de la demande: 13.08.2003
(73) Titulaire: Electricité de France, 75008 Paris (FR)
(72) Inventeur: Moulard, Jean-Michel, 92350 Le Plessis Robinson (FR); Issa, Fawzi, 75014 Paris (FR)
(74) Mandataire: Gorrée, Jean-Michel

(56) Documents cités:
- WO-A-01/41325
- US-A- 4 835 516

## Description

La présente invention concerne des perfectionnements apportés dans le domaine de la transmission d'informations par signaux CPL (Courant Porteur en Ligne) dans un câble souterrain de transport d'énergie électrique triphasé, et plus précisément l'invention concerne la transmission d'informations par signaux CPL hautes fréquences dans un câble souterrain de transport d'énergie électrique triphasé, notamment, bien que non exclusivement, basse tension, câble du type à quatre conducteurs dont un conducteur neutre non isolé en contact galvanique avec une gaine conductrice de blindage du câble ou du type à trois conducteurs de phase entourés par un neutre périphérique.

Le problème qui est à la base de l'invention réside dans le fait que, si le triphasé est couramment utilisé aux fréquences industrielles (basse fréquence de 50 Hz, 60 Hz, ...), il ne l'est pas dans le domaine des hautes fréquences, notamment parce que les générateurs de signaux HF sont bipolaires : ces générateurs ne sont donc connectables qu'entre deux phases ou entre phase et neutre.

Les câbles souterrains de transport d'énergie électrique triphasés, notamment basse tension, comprennent trois conducteurs de phases ϕ₁, ϕ₂, ϕ₃ et un conducteur de neutre N. Ce conducteur de neutre peut se présenter sous forme d'un quatrième conducteur qui est physiquement au contact de la face interne d'une gaine métallique en acier entourant les quatre conducteurs : c'est le cas du câble type HN 33S33 ou NFC 33-210 qui est couramment utilisé en France. Ce conducteur de neutre peut aussi être périphérique, notamment en aluminium, et entourer les trois conducteurs de phase : c'est le cas du câble type HN 33S32 qui est aussi utilisé en France et dans certains pays étrangers.

Le document US 4 835 516 décrit un procédé de transmission d'informations par signaux CPL audio fréquence dans un câble souterrain de transport d'énergie électrique triphasé du type à quatre conducteurs.

L'invention a pour but de proposer des moyens - procédé et dispositif - propres à permettre une propagation optimale du signal CPL HF et une bonne conversion monophasé/triphasé au droit des branchements.

A ces fins, l'invention propose, selon un premier de ses aspects, un procédé de transmission d'informations défini dans la revendication indépendante 1.

L'invention repose sur les résultats d'études menées par la Déposante sur les modes propres de couplage optimaux des câbles souterrains triphasés des types HN 33S33 et HN 33S32. L'analyse modale dans une large bande de fréquences (typiquement 1 MHz - 30 MHz) conduit à trois modes propres de propagation :
- le premier mode, dit mode "symétrique", est un mode différentiel bifilaire, dont l'excitation est obtenue en connectant un générateur de signal HF entre les deux conducteurs de phases en regard (ϕ₁, ϕ₃) ;
- le deuxième mode, dit mode "transverse", est lui aussi un mode différentiel bifilaire, dont l'excitation est obtenue en connectant un générateur de signal HF entre les deux conducteurs de phases en regard (ϕ₁, ϕ₃) réunis l'un à l'autre et le conducteur de l'autre phase (ϕ₂) ;
- le troisième mode de propagation, dit mode "commun", est un mode commun tel que l'aller des courants se fait par les trois phases et le retour par l'ensemble constitué du blindage périphérique en contact galvanique avec l'écran du conducteur de neutre (câble HN 33S33) ou par le neutre périphérique (câble HN 33S32).

Le mode "commun" constitue la transposition, pour des signaux CPL HF, du couplage habituellement mis en oeuvre pour les signaux CPL basses fréquences (c'est-à-dire pour les fréquences inférieures à environ 150 kHz). Les mesures effectuées en laboratoire ont permis de mettre en évidence que l'atténuation dans le mode "commun" était sensiblement plus importante que les atténuations dans les modes "symétrique" et "transverse" à cause de la présence du blindage en acier du câble qui introduit des pertes considérables dues à ses caractéristiques de conducteur ferromagnétique. De ce fait, le mode "commun" n'est pas propice à la transmission de données.

De leur côté, les modes "symétrique" et "transverse" présentent des propriétés très intéressantes pour la transmission de données. Néanmoins, le mode "symétrique" ne fait intervenir que les deux conducteurs des phases en regard (ϕ₁, ϕ₃) : toute l'énergie transmise au câble, avec un tel couplage, restera confinée entre les deux conducteurs utilisés et les diaphonies sur le conducteur voisin de l'autre phase (ϕ₂) seront alors trop faibles pour que ce couplage puisse être exploité en pratique.

Finalement, seul le mode "transverse" permet d'établir un couplage correct et sensiblement équilibré sur les trois phases du câble, dans une large bande de fréquences (1 MHz - 30 MHz).

Des essais comparatifs ont été effectués en laboratoire sur un tronçon de câble souterrain de type NH 33S33 ayant une longueur de l'ordre de 100 m :
a) un premier couplage, classique, consiste à injecter le signal HF entre le conducteur de neutre et le conducteur de l'une des phases (ϕ₁ par exemple) , tandis que la réception est faite entre le conducteur de neutre et le conducteur d'une autre phase (ϕ₂ par exemple, simulant le cas d'un branchement d'un utilisateur sur la phase ϕ₂) ;
b) un second couplage, effectué conformément à l'invention, permet l'excitation du mode propre "transverse" pour l'injection du signal HF, tandis que la réception est faite classiquement entre le conducteur de neutre et le conducteur de l'une des phases (par exemple ϕ₁ pour simuler un utilisateur connecté sur la phase ϕ₁).

On constate alors que le couplage d'excitation du mode "transverse", conforme à l'invention, procure un gain de 4 à 5 dB, quelle que soit la fréquence, par rapport au couplage classique.

Dans un autre type d'essais, on met en oeuvre une autre configuration propre à augmenter la portée du signal HF sur des concaténations de câbles souterrains triphasés. Ainsi il est possible d'envisager des mises en cascade de tronçons de câbles souterrains telles qu'en un point médian vienne s'intercaler un couplage d'excitation du mode propre "transverse" conformément à l'invention : on obtient alors des améliorations importantes pouvant aller jusqu'à 20 dB.

Des essais in situ ont ensuite été pratiqués sur un réseau triphasé basse tension en fonctionnement. L'injection du signal HF a été faite au niveau du poste de transformation HT A/BT selon deux types de couplage différents :
- le premier couplage était un couplage classique du type phase-neutre sur un départ du poste de transformation ;
- l'autre couplage était un couplage d'excitation du propre "transverse" sur le même départ.

Le générateur délivrait des signaux HF avec un balayage fréquentiel de raies monochromatiques entre 1 MHz et 30 MHz.

La réception était faite en aval du départ, au niveau de branchements de clients connectés sur une artère de distribution souterraine triphasée.

Il a ainsi pu être constaté que le niveau du signal reçu dans le cas du couplage "transverse" conforme à l'invention était supérieur de 10 à 20 dB au niveau du signal reçu dans le cas du couplage classique de type phase-neutre.

Grâce à la mise en oeuvre d'un couplage conforme à l'invention qui excite le mode propre de propagation du type "transverse" du câble souterrain, l'énergie HF transmise au câble se trouve concentrée entre les trois conducteurs de phase exclusivement. La diaphonie créée sur le conducteur de neutre devient alors négligeable et les courants de mode commun, dont la circulation se fait par la terre environnant le câble, deviennent négligeables. Les rayonnements électromagnétiques générés par le câble sont uniquement dus aux courants du mode différentiel "transverse". La présence du blindage en acier entourant le câble a donc pour effet de limiter notablement le rayonnement de celui-ci.

Selon un second de ses aspects, l'invention propose, pour la mise en oeuvre du procédé ci-dessus, un dispositif de couplage modal à large bande en fréquence décrit dans la revendication indépendante 2.

Dans un premier mode de réalisation possible, la susdite seconde liaison est une liaison filaire simple.

Dans un deuxième mode de réalisation possible, la susdite seconde liaison inclut un condensateur.

Dans un troisième mode de réalisation possible, il comprend une troisième liaison entre ladite première borne du générateur et le neutre du câble avec interposition d'une bobine de filtrage, afin de constituer une alimentation intégrée du générateur,
et une seconde bobine de filtrage est connectée en parallèle sur le condensateur de la susdite seconde liaison.

Les composants utilisés pour la réalisation d'un dispositif de couplage conforme à l'invention qui exploite le mode propre "transverse" sont uniquement des composants passifs (condensateurs, bobines d'inductance) : ce dispositif de couplage n'inclut ni composants actifs, ni transformateur (s) de couplage. Il en résulte que la plage de fonctionnement en fréquences est large et couvre la bande 1 MHz - 30 MHz dédiée à la transmission de signaux CPL HF.

La mise en oeuvre des dispositions conformes à l'invention permet donc d'assurer, par des moyens simples et peu coûteux, un couplage modal à large bande en fréquences pour la transmission de signaux CPL HF dans un câble souterrain triphasé, notamment basse tension.

L'invention sera mieux comprise à la lecture de la description détaillée qui suit de certains modes de réalisation préférés donnés uniquement à titre d'exemples non limitatifs. Dans cette description on se réfère aux dessins annexés sur lesquels :
- les figures 1 et 2 sont des vues schématiques illustrant la mise en oeuvre des dispositions de l'invention avec respectivement les deux types de câble souterrain triphasés concernés ; et
- les figures 3 à 5 sont des schémas électriques illustrant respectivement trois modes de réalisation possibles d'un dispositif de couplage modal conforme à l'invention.

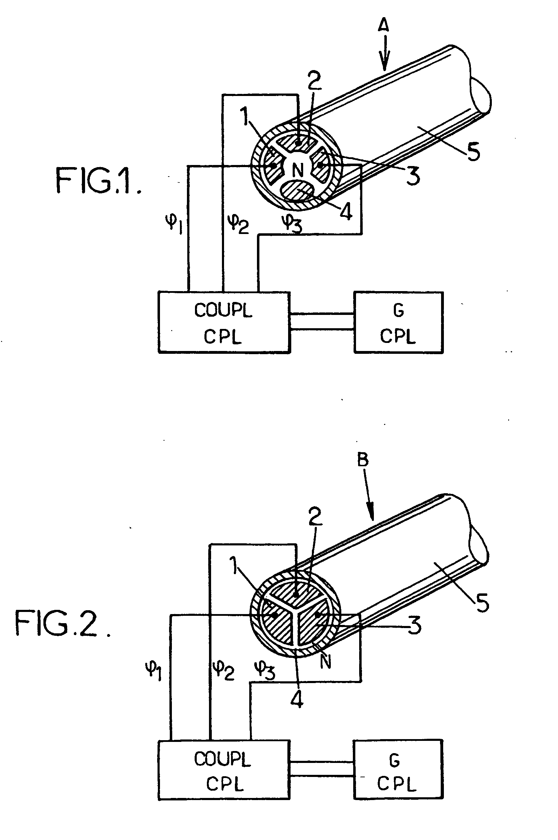

En se reportant tout d'abord à la figure 1, un câble électrique A propre à constituer une canalisation souterraine de transport électrique triphasée, notamment basse tension, comprend trois conducteurs de phase désignés respectivement par les références 1 (phase ϕ₁), 2 (phase ϕ₂) et 3 (phase ϕ₃). Un quatrième conducteur 4 est un conducteur de neutre N qui est en contact galvanique avec une enveloppe ou gaine métallique 5, par exemple en acier, qui entoure les conducteurs (câble souterrain du type HN 33S33, le plus largement utilisé en France).

Conformément à l'invention, un générateur G de signal CPL haute fréquence à sortie bipolaire est couplé (en général par l'intermédiaire d'un modem CPL non illustré) aux trois conducteurs 1, 2, 3 des phases ϕ₁, ϕ₂, et ϕ₃ respectivement (par l'intermédiaire de condensateurs de découplage respectifs n'apparaissant pas sur le dessin), de manière à exciter un mode de propagation propre du câble du type mode différentiel bipolaire et à assurer un couplage modal à large bande en fréquence.

En se reportant maintenant à la figure 2, un câble électrique B propre à constituer une canalisation souterraine de transport électrique triphasée, notamment basse tension, comprend trois conducteurs de phase respectivement 1 (phase ϕ₁), 2 (phase ϕ₂) et 3 (phase ϕ₃), mais le conducteur de neutre est ici périphérique (câble souterrain du type HN 33S32, utilisé en France, et à l'étranger).

La connexion du générateur G de signal CPL HF à sortie bipolaire aux trois conducteurs de phase 1 à 3 se fait, comme dans le cas précédent, par l'intermédiaire d'un coupleur modal à large bande en fréquence de manière que soit excité un mode de propagation propre du câble du type mode différentiel bipolaire.

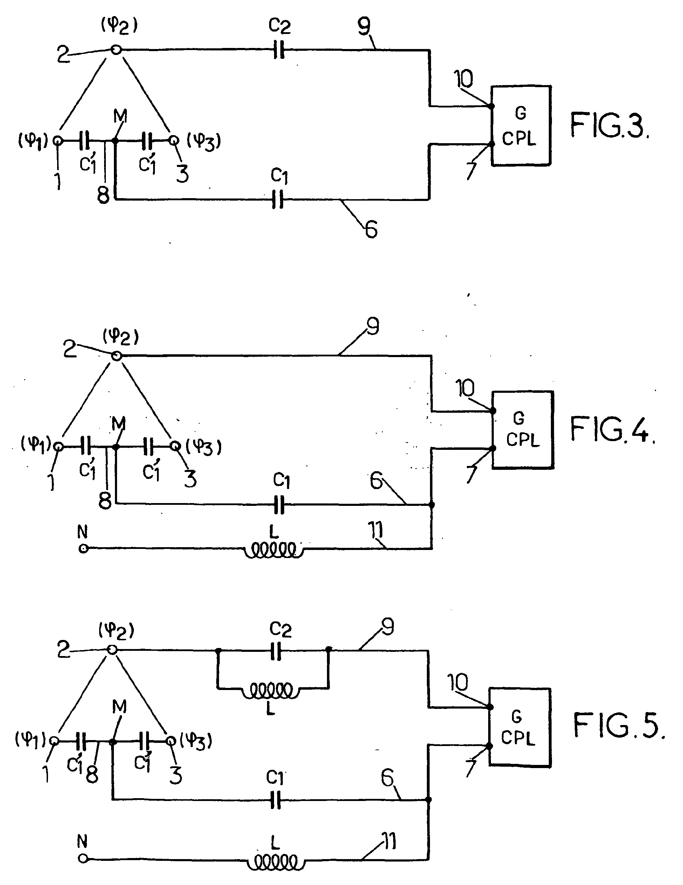

A la figure 3 est illustré le schéma électrique d'un coupleur modal à large bande en fréquence conforme à l'invention pour la mise en oeuvre du procédé de l'invention consistant à exciter un mode de propagation propre du câble du type mode différentiel bipolaire en connectant le générateur G à sortie bipolaire, d'une part, entre les deux conducteurs 1, 3 de phases en regard (ϕ₁, ϕ₃) réunis l'un à l'autre et, d'autre part, au conducteur 2 de l'autre phase (ϕ₂).

Plus spécifiquement, une première liaison 6 est établie, via un condensateur C₁, entre une borne de sortie 7 du générateur G et un point milieu M d'une connexion 8 réunissant les deux conducteurs 1 (phase ϕ₁) et 3 (phase ϕ₃), avec interposition de deux condensateurs C'₁ entre le point milieu M et les phases respectives ϕ₁ et ϕ₃.

Une seconde liaison 9 est établie, via un condensateur C₂, entre l'autre borne de sortie 10 du générateur G et l'autre conducteur 2 (phase ϕ₂).

Tous les condensateurs C₁, C₂, C'₁ ont la même capacité (par exemple typiquement 10 nF) et le coupleur ainsi constitué est de structure symétrique.

On notera que, outre leur fonction de couplage modal à large bande en fréquence, les condensateurs assurent également la fonction de découplage dévolue aux trois condensateurs de découplage spécifiques illustrés sur les figures 1 et 2.

Le fonctionnement de l'agencement illustré à la figure 3 nécessite la mise en oeuvre d'une alimentation électrique externe.

On soulignera que le condensateur C₂ n'est présent dans la seconde liaison 9 que pour symétriser les deux liaisons 6 et 9 et correspondre ainsi au condensateur C₁ de la première liaison 6. Toutefois le condensateur C₂ n'est pas strictement indispensable et la seconde borne de sortie 10 du générateur G peut être réunie au conducteur 2 de la phase 2 de façon directe, par une simple connexion filaire, comme illustré à la figure 4. Dans ce cas, il faut prévoir une alimentation électrique de l'équipement CPL qui soit intégrée à cet équipement : à cet effet une troisième liaison 11 est prévue entre la première sortie 7 du générateur G au conducteur de neutre N par l'intermédiaire d'une bobine d'inductance L assurant le découplage de la fréquence du réseau (typiquement 50 Hz).

Une alimentation intégrée peut également être utilisée dans le cas du mode de réalisation de la figure 3. On peut alors, comme illustré à la figure 5, prévoir à cet effet le même montage qu'à la figure 4, c'est-à-dire une troisième liaison 11 entre la première sortie 7 du générateur G au conducteur de neutre N par l'intermédiaire d'une bobine d'inductance L assurant le découplage de la fréquence du réseau. Par raison de symétrie, une autre bobine d'inductance L est disposée dans la seconde liaison 9, en parallèle sur le condensateur C₂ (typiquement L = 14,4 pH, bobine formée de 15 spires enroulées sur un noyau 55071A).

Les dispositions conformes à l'invention, qui viennent d'être exposées, conduisent à un couplage original des signaux CPL HF sur un câble électrique souterrain triphasé, notamment basse tension. Le recours à un couplage modal du type "transverse" permet d'augmenter considérablement la portée des signaux CPL HF injecté dans le câble, mais aussi de limiter notablement les rayonnements électromagnétiques associés.

## Revendications

1. Procédé de transmission d'informations par signaux CPL haute fréquence dans un câble souterrain de transport d'énergie électrique triphasé du type à quatre conducteurs dont un conducteur neutre en contact galvanique avec une gaine conductrice de blindage du câble ou du type à trois conducteurs de phase entourée par un neutre périphérique,
**caractérisé en ce qu'**on excite un mode de propagation propre du câble du type mode différentiel bipolaire en connectant un générateur (G) de signal CPL HF à sortie bipolaire, d'une part, entre les deux conducteurs de phases (1, 3) en regard (φ₁, φ₃) réunis l'un à l'autre par l'intermédiaire d'une première liaison (6) entre une première borne (7) de sortie de générateur (G) et un point milieu (M) d'une connexion (8) ; deux condensateurs (C_{1'}) étant interposés dans ladite connexion (8) entre ledit point milieu (M) et les deux conducteurs respectifs (1, 3), et un autre condensateur (C₁) étant inclus dans ladite première liaison (6) en amont dudit point milieu (M) ; et, d'autre part, au conducteur (2) de l'autre phase (φ₂) par l'intermédiaire d'une seconde liaison (9) entre une seconde borne (10) de sortie du générateur (G) et le conducteur (2) de l'autre phase (φ₂), et une troisième liaison (11) entre ladite première borne (7) du générateur (G) et le neutre (N) du câble avec interposition d'une bobine de filtrage (L), afin de constituer une alimentation intégrée du générateur (G),
ce grâce à quoi on assure un couplage modal à large bande de fréquences entre ledit générateur de signal CPL HF à sortie bipolaire et ledit câble souterrain triphasé basse tension.

2. Dispositif de couplage modal à large bande en fréquence propre à coupler un générateur (G) de signal CPL HF à sortie bipolaire (7, 10) à un câble souterrain triphasé basse tension du type (A) à quatre conducteurs (1-4) dont un conducteur neutre en contact galvanique avec une gaine conductrice (5) de blindage du câble ou du type (B) à trois conducteurs (1-3) entourée par un neutre périphérique (5), pour la mise en oeuvre du procédé selon la revendication 1,
**caractérisé en ce qu'**il comprend :
- une première liaison (6) entre une première borne (7) de sortie de générateur (G) et un point milieu (M) d'une connexion (8) réunissant l'un à l'autre les deux conducteurs (1, 3) de phase en regard (φ₁, φ₃), deux condensateurs (C₁,) étant interposés dans ladite connexion (8) entre ledit point milieu (M) et les deux conducteurs respectifs (1, 3), et un autre condensateur (C₁) étant inclus dans ladite première liaison (6) en amont dudit point milieu (M) ;
- une seconde liaison (9) entre une seconde borne (10) de sortie du générateur (G) et le conducteur (2) de l'autre phase (φ₂) ; et
- une troisième liaison (11) entre ladite première borne (7) du générateur (G) et le neutre (N) du câble avec interposition d'une bobine de filtrage (L), afin de constituer une alimentation intégrée du générateur (G).

3. Dispositif de couplage modal selon la revendication 2, **caractérisé en ce que** la susdite seconde liaison (9) est une liaison filaire simple.

4. Dispositif de couplage modal selon la revendication 2, **caractérisé en ce que** la susdite seconde liaison (9) inclut un condensateur (C₂).

5. Dispositif de couplage modal selon la revendication 4, **caractérisé en ce qu'**une seconde bobine de filtrage (L) est connectée en parallèle sur le condensateur (C₂) de la susdite seconde liaison (9).

## Claims

1. Method of transmitting information by high-frequency powerline communication signals in an underground three-phase electric power cable of the type with four conductors including a neutral conductor in galvanic contact with a conductive sheath for shielding the cable or of the type with three phase conductors, which is surrounded by a peripheral neutral,
**characterised in that** a propagation mode peculiar to the cable of the bipolar differential mode type is initiated by connecting a HF powerline communication signal generator (G) with a bipolar output, on the one hand, between the two phase conductors (1, 3) facing each other (φ₁, φ₃) which are connected to each other via a first connection (6) between a first output terminal (7) of the generator (G) and a mid point (M) of a connection (8); two capacitors (C_{1'}) being interposed in the said connection (8) between the said mid point (M) and the two respective conductors (1, 3), and another capacitor (C₁) being included in the said first connection (6) upstream of the said mid point (M); and on the other hand, to the conductor (2) of the other phase (φ₂) by means of a second connection (9) between a second output terminal (10) of the generator (G) and the conductor (2) of the other phase (φ₂), and a third connection (11) between the said first terminal (7) of the generator (G) and the neutral (N) of the cable with a filtering coil (L) being interposed, in order to constitute an integrated power supply of the generator (G), by virtue of this a wide frequency band modal coupling is ensured between the said HF powerline communication signal generator with a bipolar output and the said low voltage three-phase underground cable.

2. Wide frequency band modal coupling device suitable for coupling a HF powerline communication signal generator (G) with a bipolar output (7, 10) to a low voltage three-phase underground cable of the type (A) with four conductors (1-4) including a neutral conductor in galvanic contact with a conductive sheath (5) for shielding the cable, or of the type (B) with three conductors (1-3), which is surrounded by a peripheral neutral (5), for implementation of the method as claimed in claim 1,
**characterised in that** it comprises:
- a first connection (6) between a first output terminal (7) of the generator (G) and a mid point (M) of a connection (8) mutually connecting the two phase conductors (1, 3) which face each other (φ₁, φ₃), two capacitors (C_{1'}) being interposed in the said connection (8) between the said mid point (M) and the two respective conductors (1, 3), and another capacitor (C₁) being included in the said first connection (6) upstream of the said mid point (M);
- a second connection (9) between a second output terminal (10) of the generator (G) and the conductor (2) of the other phase (φ₂); and
- a third connection (11) between the said first terminal (7) of the generator (G) and the neutral (N) of the cable with a filtering coil (L) being interposed, in order to constitute an integrated power supply of the generator (G).

3. Modal coupling device as claimed in claim 2, **characterised in that** the said second connection (9) is a simple fixed connection.

4. Modal coupling device as claimed in claim 2, **characterised in that** the said second connection (9) includes a capacitor (C₂).

5. Modal coupling device as claimed in claim 4, **characterised in that** a second filtering coil (L) is connected in parallel on the said capacitor (C₂) of the said second connection (9).

## Patentansprüche

1. Verfahren zur Übertragung von Informationen über Hochfrequenz-TFA-Signale in einem Dreiphasen-Landkabel zum Transport von elektrischer Energie vom Typ mit vier Leitern, von denen einer ein Nullleiter in galvanischem Kontakt mit einer leitenden Abschirmumhüllung des Kabels ist, oder vom Typ mit drei Phasenleitern, der von einem Umfangsnullleiter umgeben ist,
**dadurch gekennzeichnet, dass** ein Differential-Bipolar-Ausbreitungseigenmodus des Kabels angeregt wird, indem ein HF-TFA-Signalgenerator (G) mit zweipoligem Ausgang einerseits zwischen die zwei gegenüberliegenden Leiter (1, 3) der zwei Phasen (φ₁, φ₃), die miteinander verbunden sind, mit Hilfe einer ersten Verbindung (6) zwischen einer ersten Ausgangsklemme (7) des Generators (G) und einem mittleren Punkt (M) einer Verbindung (8) geschaltet wird, wobei zwei Kondensatoren (C_{1'}) in der Verbindung (8) zwischen dem mittleren Punkt (M) und den zwei jeweiligen Leitern (1, 3) angeordnet sind, und wobei ein weiterer Kondensator (C₁) in der ersten Verbindung (6), vor dem mittleren Punkt (M) enthalten ist, und andererseits mit dem Leiter (2) der weiteren Phase (φ₂) mit Hilfe einer zweiten Verbindung (9) zwischen einer zweiten Ausgangsklemme (10) des Generators (G) und dem Leiter (2) der weiteren Phase (φ₂) verbunden wird, und mit einer dritten Verbindung (11) zwischen der ersten Klemme (7) des Generators (G) und dem Nullleiter (N) des Kabels unter Zwischenschalten einer Filterspule (L) verbunden wird, um eine integrierte Versorgung des Generators (G) zu bilden, wodurch eine Modenkopplung großer Bandbreite zwischen dem HF-TFA-Signalgenerator mit zweipoligem Ausgang und dem Dreiphasen-Landkabel niedriger Spannung gewährleistet ist.

2. Modenkopplungsvorrichtung mit breitem Eigenfrequenzband zum Koppeln eines HF-TFA-Signalgenerators mit zweipoligem Ausgang (7, 10) mit einem Dreiphasen-Landkabel niedriger Spannung vom Typ (A) mit vier Leitern (1-4), von denen sich ein Nullleiter in galvanischem Kontakt mit einer leitenden Abschirmumhüllung (5) des Kabels befindet, oder vom Typ (B) mit drei Leitern, die von einem Umfangsnullleiter (5) umgeben sind, um das Verfahren nach Anspruch 1 zu verwirklichen,
**dadurch gekennzeichnet, dass** sie umfasst:
- eine erste Verbindung (6) zwischen einer ersten Ausgangsklemme (7) des Generators (G) und einem Mittleren Punkt (M) einer Verbindung (8), die die zwei Leiter (1, 3) entgegengesetzter Phase (φ₁, φ₃) verbindet, wobei in die Verbindung (8) zwischen dem Mittleren Punkt (M) und den zwei jeweiligen Leitern (1, 3) zwei Kondensatoren (C_{1'}) geschaltet sind, und wobei in die erste Verbindung (6), vor dem Mittleren Punkt (M) ein weiterer Kondensator (C₁) geschaltet ist;
- eine zweite Verbindung (9) zwischen einer zweiten Ausgangsklemme (10) des Generators (G) und dem Leiter (2) der weiteren Phase (φ₂); und
- eine dritte Verbindung (11) zwischen der ersten Klemme (7) des Generators und dem Nullleiter (N) des Kabels, wobei eine Filterspule (L) zwischengeschaltet ist, um so eine integrierte Versorgung durch den Generator (G) zu bilden.

3. Modenkopplungsvorrichtung nach Anspruch 2, **dadurch gekennzeichnet, das** die oben genannte zweite Verbindung (9) eine einfache Drahtverbindung ist.

4. Modenkopplungsvorrichtung nach Anspruch 2, **dadurch gekennzeichnet, dass** die oben genannte zweite Verbindung (9) einen Kondensator (C2) enthält.

5. Modenkopplungsvorrichtung nach Anspruch 4, **dadurch gekennzeichnet, dass** parallel zu dem Kondensator (C2) der oben genannten Verbindung (9) eine zweite Filterspule (L) geschaltet ist.
